# EUROPEAN PATENT SPECIFICATION

(11) **EP 3 056 792 B1**
(45) Date of publication and mention of the grant of the patent: **01.05.2019**
(21) Application number: 16154971.2
(22) Date of filing: 10.02.2016
(51) Int. Cl.: F17C 1/00, F17C 1/16, F17C 13/00, B60K 15/03

(54) **PRESSURE VESSEL WITH SPHEROIDAL SHAPE**
SPHÄRISCHER DRUCKBEHÄLTER
RÉCIPIENT SOUS PRESSION SPHERIQUE

(30) Priority: 16.02.2015 GB 201502589
(43) Date of publication of application: 17.08.2016
(73) Proprietor: Airbus Operations Limited, Bristol BS34 7PA (GB)
(72) Inventor: MEYER, Jonathan, London, WC2R 0AP (GB)
(74) Representative: Worthington, Richard Easton

(56) References cited:
- BE-A- 374 101
- DE-A1- 1 944 315
- DE-A1- 2 032 791
- GB-A- 948 566
- GB-A- 2 121 945
- US-A- 2 341 044
- US-A- 2 457 118
- US-A- 2 844 271
- US-A- 2 920 784

## Description

### FIELD OF THE INVENTION

The present invention relates to a pressure vessel. More particularly the invention relates to a pressure vessel comprising interconnected hollow spheroids.

### BACKGROUND OF THE INVENTION

Pressure vessels are used extensively in many applications, including as fuel tanks in satellites and other space vehicles. They are also used in hydraulic applications on aircraft and other vehicles. The optimum shape for a pressure vessel is spherical due to the uniform tensile stress in the skin generated by this geometry. Cylinders and toroids are almost as efficient as a spheroidal shape due to the quasi-uniform skin stress in these shapes. A common problem is that standard shaped pressure vessels do not fit well into the space available within a structural assembly, and so there is generally a compromise required. Shapes which are far from spherical are very inefficient pressure vessels and often infeasible.

Pressure vessels for lightweight applications are typically either high strength alloy construction, usually involving fabrication steps such as welding, or more recently are filament wound carbon fibre composite construction. These manufacturing processes constrain the design to relatively simple geometries due to the complexities of fabrication. These relatively simple geometries (spheres, toroids, cylinders) can be difficult to accommodate within the space available in a design. In many circumstances it would be preferable to have a pressure vessel which could be of an arbitrary shape, thereby using the space available within the product, and thereby providing the maximum possible volumetric efficiency for storage of pressurized media.

US 2,920,784 describes a storage vessel with a plurality of horizontally aligned spheroidal segments joined along vertical planes to form a vessel. US 2,457,118 relates to a pressure vessel consisting of intersecting spherical segments composed of integrated sheet metal worked plates welded at their intersections to provide a fluid tight vessel, and secured against pressure deformation by inwardly extending diaphragms.

### SUMMARY OF THE INVENTION

A first aspect of the invention provides a pressure vessel comprising a plurality of interconnected hollow spheroids, each hollow spheroid is truncated to form at least two ports which are fluidly connected to respective ports of adjacent hollow spheroids, and adjacent hollow spheroids have overlapping radii at the connected ports, characterised in that each hollow spheroid has an outer wall which is contiguous with the outer wall of an adjacent hollow spheroid at the connected ports, and the contiguous walls of at least three of the adjacent connected ports intersect to form a pillar at the intersection.

A pressure vessel is a closed container which holds fluids at a pressure substantially different from the ambient pressure external to the pressure vessel.

A spheroid in this context is an approximately spherical body. Each spheroid is incomplete due to the truncation which forms the ports. The spheroids may be truncated approximate spheroids, or may be truncated true spheroids (i.e. ellipsoids of revolution about one of its principal axes). The spheroids may be spheres, oblate spheroids or prolate spheroids.

The invention is advantageous in that interconnected hollow spheroids may form a unit cell that can be repeated to form a wide variety of shapes for the pressure vessel such that it can fit in environments unsuitable for typical spherical, toroidal or cylindrical shaped pressure vessels. The structural efficiency of the pressure vessel is largely uncompromised since it comprises a plurality of hollow spheroids which are each structurally efficient. Each hollow spheroid is preferably designed to provide optimum geometric conditions with minimal stress concentrations in its outer wall (or skin).

The hollow spheroids can be arranged such that they fill the available arbitrary space efficiently while maintaining surface stresses similar to those of a larger spheroidal pressure vessel which would be less space efficient within the arbitrary volume allocated. This improved packaging of pressure vessels within constrained spaces may lead to mass reduction of the pressure vessel, and/or may lead to improved high pressure capability for a given available space as compared with conventionally shaped pressure vessels. The invention also allows for automation of pressure vessel design by using standard unit cells sized for specific pressures and then propagating them through a design space by using a meshing algorithm (such as is typically used in mesh generation for finite element modelling and computational fluid dynamics).

Contiguous in this context means that the hollow spheroids share a common edge or boundary without a break. In other words the outer wall of any one of the hollow spheroids continues without any break in the outer wall of its adjacent hollow spheroid at the connected port between the two adjacent hollow spheroids. In a preferred embodiment the hollow spheroids are integrally formed with one another such that the connection is free from butted edges of the outer walls of the adjacent hollow spheroids. Whether integrally formed or not, the contiguous outer walls serve to maintain surface stresses between adjacent hollow spheroids so as to maximize possible volumetric efficiency for storage of compressed media.

The outer wall may have a thickness which increases nearest the ports.

The pillar may be solid, or may be hollow.

The hollow pillar may provide a fluid path, and a plurality of the hollow pillars fluidly connect to chambers around the interconnected hollow spheroids.

The hollow spheroids may each be of the same size, or alternatively the hollow spheroids may be of different sizes.

The hollow spheroids may be arranged as a finite 2-dimensional or a finite 3-dimensional lattice. The lattice may approximate to a Bravais lattice.

Outer walls of the hollow spheroids may comprise one of more of: metal, plastic, or fibre reinforced composite materials.

A further aspect of the invention provides a fuel container comprising the pressure vessel according to the first aspect.

A further aspect of the invention provides a heat exchanger comprising the pressure vessel according to the first aspect.

In the heat exchanger the pressure vessel may have a fluid inlet and a fluid outlet, and a first fluid medium may be arranged for passing through the interconnected hollow spheroids of the pressure vessel and a second fluid medium may be arranged for passing around the interconnected hollow spheroids.

A further aspect of the invention provides a reactor comprising the pressure vessel according to the first aspect.

In the reactor a catalyst may be coated on an exterior surface and/or an interior surface of the hollow spheroids of the pressure vessel.

A yet further aspect of the invention provides a method of manufacturing a pressure vessel according to the first aspect, the method comprising building the pressure vessel by an additive manufacturing technique. Additive manufacturing in this context means the laying down of successive layers of material under computer control to form a three dimensional object, also known as 3D printing. Depending on the material used various additive manufacturing techniques may be employed.

### BRIEF DESCRIPTION OF THE DRAWINGS

Embodiments of the invention will now be described with reference to the accompanying drawings, in which:
Figures 1a-d illustrate a pyramidal unit cell of four interconnected hollow spheres, and in which figure 1a shows a front view, figure 1b shows a left side view, figure 1c shows a section view on A-A, and figure Id shows a section on B-B;
Figures 2a-d illustrate an arrangement of interconnected hollow spheres utilising the pyramidal unit cell shown in figures 1a-d, and in which figure 2a shows a front view, figure 2b shows a bottom view, figure 2c shows a section view on C-C, figure 2d shows a section view on D-D, and figure 2e illustrates a space craft including a pressurised fuel container/vessel comprising the arrangement of interconnected hollow spheres;

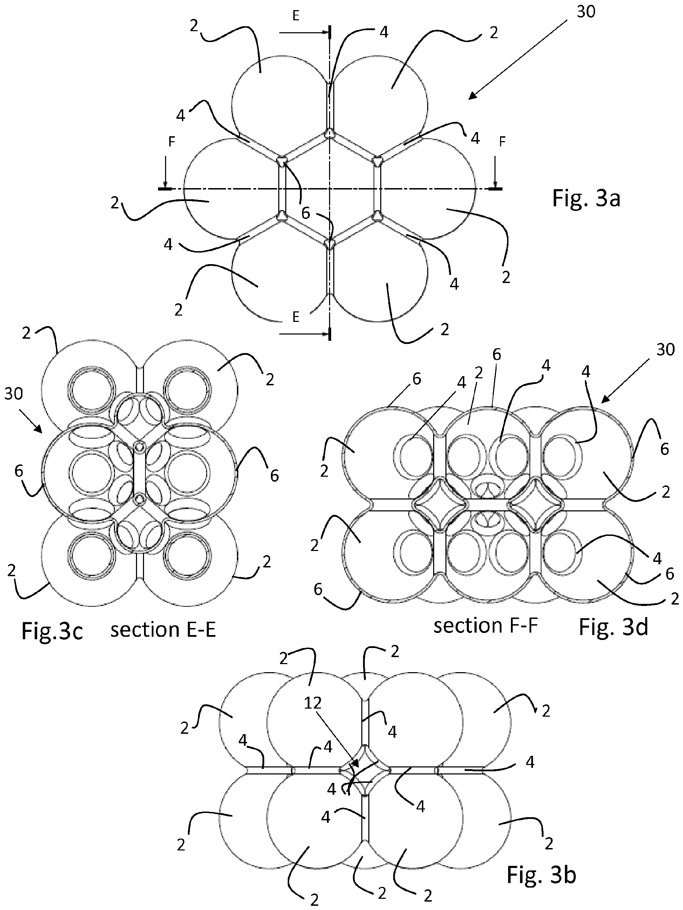

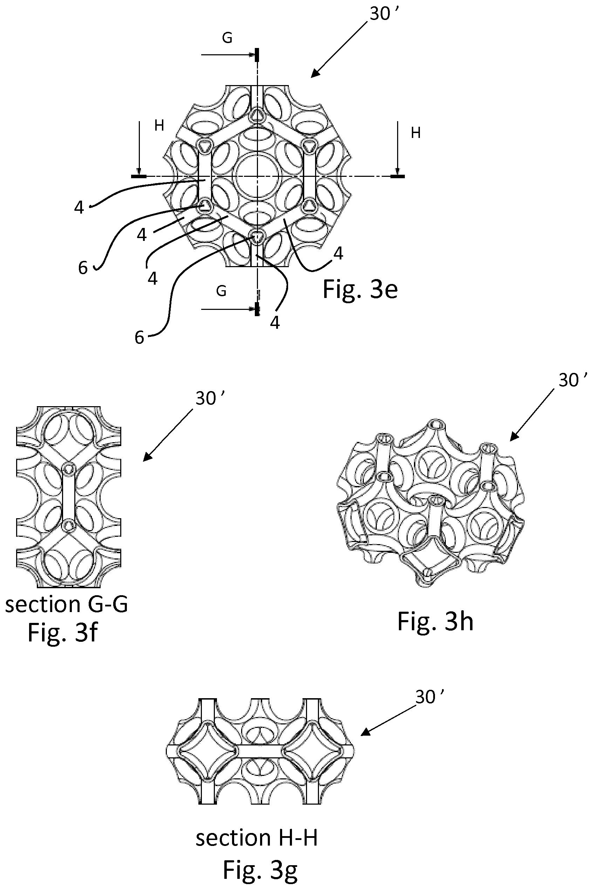

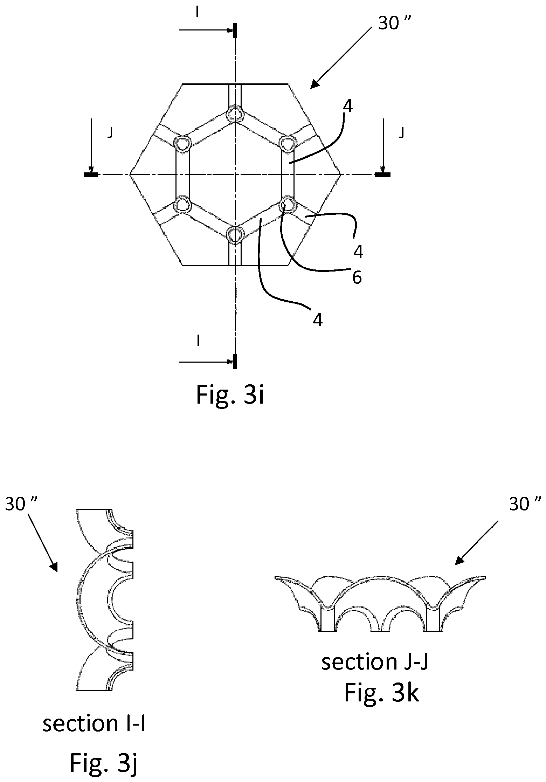

Figures 3a-k illustrate an arrangement of interconnected hollow spheres based on a hexagonal close packed unit cell, and in which figures 3a shows a front view, figure 3b shows a top view, figure 3c shows a section view on E-E, figure 3d shows a section view on F-F, figure 3e shows a partial cut-away front view of the hexagonal close packed unit cell, figure 3f shows a section view on G-G, figure 3g shows a section view on H-H, figure 3h shows an isometric view of the partial cut-away hexagonal close packed unit cell, figure 3i shows another partial cut-away front view of the hexagonal close packed unit cell, figure 3j shows a section view on I-I, and figure 3k shows a section view on J-J;
Figure 4 shows an arrangement of interconnected hollow spheres isometric based on a face centred cubic lattice;
Figure 5 shows a portion of a heat exchanger comprising the arrangement of interconnected hollow spheres of figure 4;
Figure 6 shows a portion of a reactor vessel comprising the arrangement of interconnected hollow spheres of figure 4;
Figures 7-9 illustrate schematically various interconnected spheroids for use in the pressure vessel of the invention, and in which figure 7 shows interconnected spheres/approximate spheres, figure 8 shows interconnected oblates spheroids, and figure 9 shows interconnected prolate spheroids; and
Figure 10 shows schematically a powder bed ALM processing system.

### DETAILED DESCRIPTION OF EMBODIMENT(S)

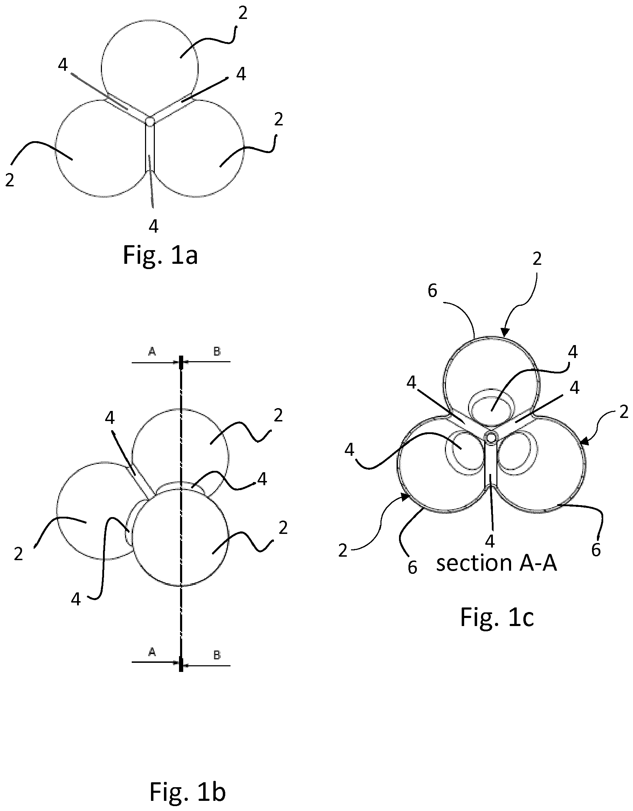

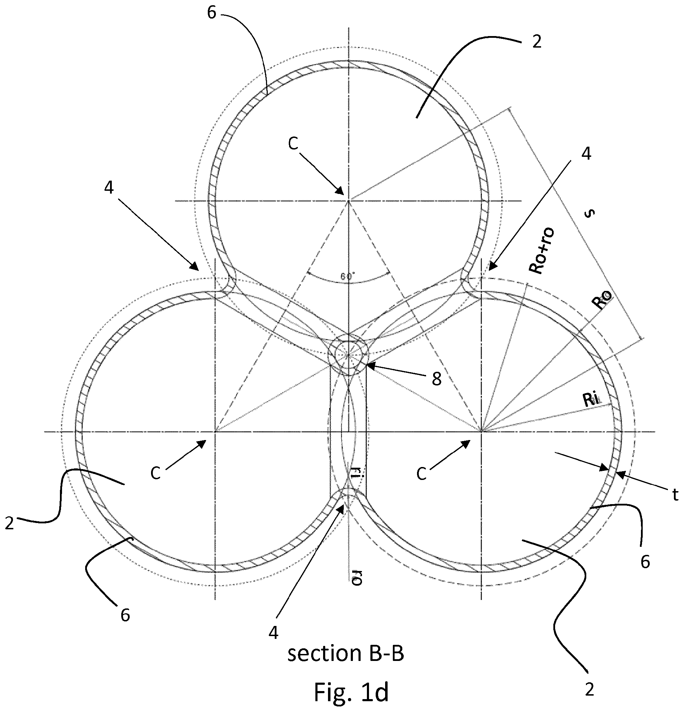

Figures 1a-d illustrate an exemplary pyramidal unit cell of four interconnected hollow spheres 2. Each of the hollow spheres 2 are substantially identical and each is truncated to form three ports 4 which are connected to respective ports 4 of neighbouring hollow spheres 2. Each port 4 is formed by truncating the sphere by a plane so as to remove a spherical cap of the complete sphere, as best shown in Figure 1a.

As best shown in Figure 1c, which is a section view on A-A of Figure 1b, each port 4 has a substantially circular aperture interconnecting the interior volumes (or chambers) of adjacent hollow spheres 2. Each hollow sphere 2 has an outer wall 6. The outer wall 6 has a substantially constant wall thickness. The outer wall 6 is contiguous with the outer wall 6 of an adjacent hollow sphere 2 at the connected ports 4. This contiguous outer wall at the connected ports 4 is concave when viewed external to the pyramidal unit cell such that the port 4 forms a throat between the interior volumes of the adjacent hollow spheres. The thickness of the outer wall 6 nearest the ports 4 may be different from that of the outer wall 6 of the sphere 2. For example, the wall thickness may be increased or decreased as compared with the substantially uniform outer wall thickness of the hollow spheres 2. Varying the wall thickness around the ports enables stress optimisation around the cut outs.

Figure Id, which is a section on B-B of figure 1b, shows the geometry of the pyramidal unit cell of interconnected hollow spheres. Each sphere 2 has a sphere centre c. The sphere centres c define an inner radius Ri and an outer radius Ro of the hollow spheres 2. The difference between the inner and outer radii is equal to the wall thickness t of the outer wall 6. In the pyramidal unit cell shown in Figures 1a-1d each sphere 2 is of the same size such that the dimensions Ri and Ro are identical for all spheres 2. The section view in Figure Id is a plane through the sphere centres c of three adjacent hollow spheres 2. The three sphere centres c form an equilateral triangle and the distance s between any two sphere centres c is identical. As can be seen, the distance s is selected such that both the inner Ri and the outer Ro of adjacent spheres 2 are overlapping thereby forming the circular apertures interconnecting the interior volumes of the adjacent hollow spheres 2 at the ports 4.

The outer wall at the connected ports 4 has an outer radius ro and an inner radius ri. In the illustrated embodiment the parameters Ri, Ro, the centre distance s and the radius ro fit a special condition where the contiguous walls at the adjacent connected ports 4 intersect to form a hollow substantially circular pillar 8 at the intersection. As can be seen from Figure Id this pillar 8 is centred at the centroid of the equilateral triangle of the sphere centres c. The centroid of the equilateral triangle lies at a point where the radius Ro+ro of a circle about respective sphere centres c intersect. By varying the centre distance s, the sphere radii Ro, Ri or the curvature of the port profile ro the pillar 8 will vary from a hollow aperture of circular section to a variety of other section shapes which may be either hollow or solid. In particular, the pillar may have a generally triangular shape. Where the pillar 8 is hollow this may provide a convenient fluid path around the interconnected spheres of the pyramidal unit cell.

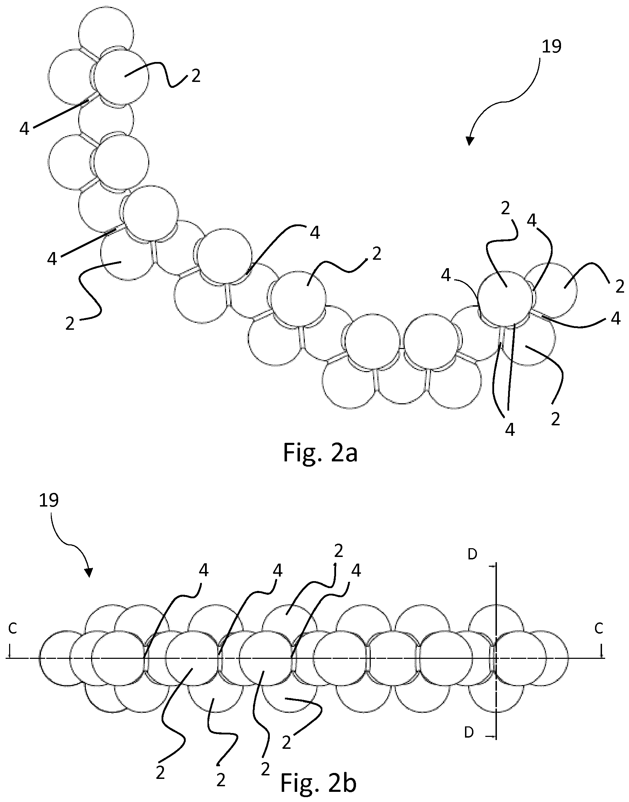

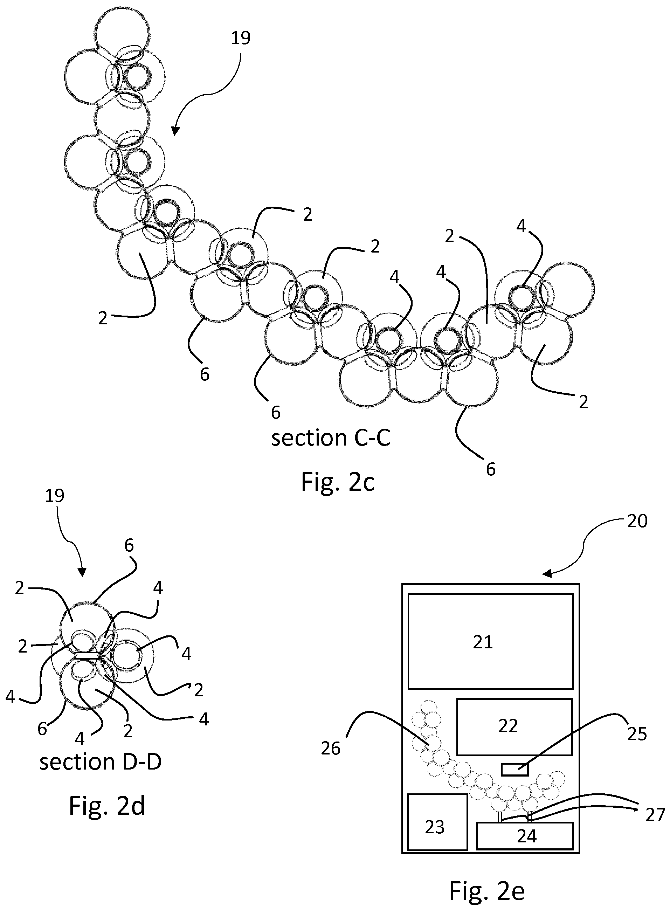

Figures 2a-d illustrate an arrangement 19 of interconnected hollow spheres utilising the pyramidal unit cell shown in Figures 1a-d. As can be seen in the arrangement 19 shown in Figure 2a the pyramidal unit cell of Figure 1a-d has been used to construct a chain of interconnected hollow spheres. This chain contains both generally linear and non-linear portions when viewed in the front view in Figure 2a. From the bottom view of Figure 2b it can be seen that the chain extends along a linear central axis along C-C. A section view on C-C is shown in Figure 2c from which the internal ports 4 become visible. A section view on D-D from Figure 2b is shown in Figure 2d.

Figure 2e illustrates schematically a spacecraft 20 including various modules 21 to 25. As can be seen from Figure 2e the various modules 21 to 25 leave a somewhat difficult packaging space within which to house a pressurised fuel container/vessel that is totally unsuited to conventional shaped pressure vessels, such as cylinders and toroids. In the spacecraft 20 shown in Figure 2e the arrangement 19 of interconnected hollow spheres utilising the pyramidal unit cell is arranged as a fuel vessel which, as can be seen from Figure 2e, fits well the space available between the various modules 21 to 25. The fuel vessel 26 is connected via pipework 27 to one of the modules 24.

Since the fuel vessel 26 comprises an arrangement of interconnected hollow spheres, the chambers defined by the interior volume of the interconnected hollow spheres can be arranged to fill the available arbitrary space efficiently while maintaining surface stresses in the outer wall 6 of the hollow spheres similar to those of larger spheroidal pressure vessels which would be less space efficient within the space available in the craft 20. Dependent upon the pressure rating of the fuel vessel the hollow chambers can be designed to provide optimal geometric conditions with minimal stress concentrations in the outer wall 6.

It will be appreciated that whilst in the above described embodiment the arrangement of interconnected hollow spheres 19 is arranged as a fuel vessel for a spacecraft 20, the arrangement of interconnected hollow spheres 19 may provide a multitude of pressure vessels for the storage of liquids or gasses under pressure in a wide variety of applications. For example, the pressure vessel may be used to protect subsea electronics, as a hydraulic accumulator in a variety of vehicles for land, sea, air or space, or as a frangible device arranged to separate into a plurality of individual spheres above a predetermined positive pressure differential inside the interconnected spheres.

Whilst the arrangement 19 of interconnected hollow spheres based on the pyramidal unit cell of Figures 1a-d is shown as a (substantially one dimensional) linear chain it will be appreciated that the pyramidal unit itself is particularly well suited for forming substantially two dimensional arrangements and substantially three dimensional lattice structures. This invention therefore contemplates that the plurality of interconnected hollow spheroids making up the pressure vessel may be arranged as a lattice.

The pyramidal unit cell shown in Figures 1a-d is but one example of an arrangement of interconnected hollow spheroids that can be arranged to form a lattice system. Figures 3a-k illustrate an arrangement of interconnected hollow spheres based on a hexagonal close packed unit cell 30. Figure 3a shows a front view of a plurality of hollow spheres 2 that are interconnected and truncated so as to form ports 4 in exactly the same way as described above with reference to the pyramidal unit cell of Figures 1a-d. It is notable from figure 3a that the "pillars" 6 formed at the intersection of the ports 4 have, in this embodiment, a substantially triangular hollow shape as different from the substantially circular hollow pillar formed in the pyramidal unit cell of Figures 1a-d. The spheres of the hexagonal close packed unit cell of Figure 3a are again all of the same size in that they have the same inner radius and outer radius. Figure 3b shows a top view of the close packed hexagonal unit cell 30 from which a substantially square interstitial opening 12 is formed between four spheres having centres lying in a common plane.

Figure 3e shows a partial cut-away front view of the hexagonal close packed unit cell 30' and Figures 3f and 3g show section views on G-G and H-H from Figure 3e, respectively. Figure 3h shows an isometric view of the partial cut away hexagonal close packed unit cell of Figure 3e. From these cut-away views, the substantially triangular tubular pillars 6 formed at the intersection of the ports 4 are visible as is the complex of interconnectivity between the various chambers formed by the interconnected hollow of even a relatively simple unit cell such as the hexagonal close packed unit cell of Figure 3a-k.

Figure 3i shows another partial cut-away front view of the hexagonal close packed unit cell 30" again showing the substantially triangular hollow tubular pillars formed at the intersection of the ports 4 and Figures 3j and 3k illustrate section views on I-I and J-J of Figure 3i, respectively.

The pyramidal unit cell and the hexagonal close packed unit cell are merely two examples of lattice structures which may be formed by interconnecting regularly sized hollow spheres and it will be appreciated that a much wider variety of finite two dimensional or finite three dimensional lattices may be constructed, including lattice structures having uniformly sized hollow spheres and arrangements of hollow spheres having two or more different sphere sizes. For example, the lattice structures may approximate to any of the Bravais lattices.

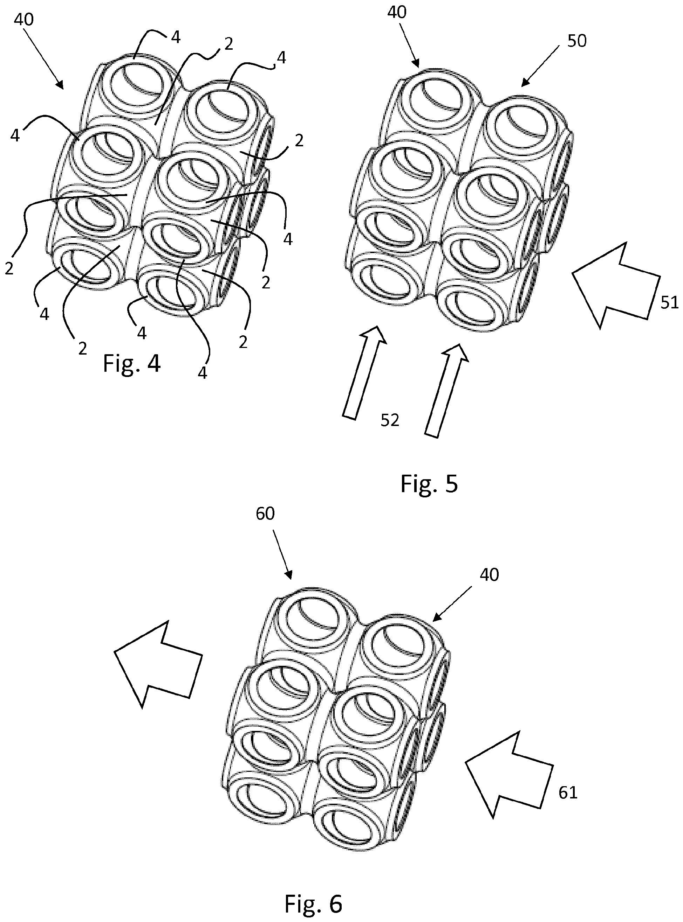

Figure 4 shows an arrangement of interconnected hollow spheres based on a face centred cubic lattice. In Figure 4 the arrangement 40 is shown in an isometric view, which has eight spheres, each sphere being truncated on six cubic faces to form six ports by means of which each sphere can connect to the ports of its six nearest neighbours (not all of which are shown in Figure 4). Similar to the pyramidal and hexagonal unit cells described above, the ports 4 each provide a substantially circular aperture, the spheres are of a common size and wall thickness, and the outer wall of each hollow sphere 2 is contiguous with the outer wall of its adjacent hollow spheres at the connected ports 4.

Figure 5 shows a portion of a heat exchanger 50 comprising the arrangement of interconnected hollow spheres 40 shown in figure 4. The heat exchanger 50 has a fluid inlet and a fluid outlet, a first fluid flow 51 is passed through the interconnected hollow spheres via their respective ports 4 between the inlet and the outlet. A second fluid flow 52 is passed around the arrangement of interconnected hollow spheres 40 such that the first and second fluid flows do not mix. In this way a temperature difference between the first and second fluids may be used to transfer heat energy through the (relatively thin) walls 6 of the hollow spheres from the first fluid flow 51 to the second fluid flow 52 or vice versa. The thin walled structure of the hollow spheres and the relatively large contact surface area between both of the first and second fluids and the sphere walls make the structure particularly well suited to use as a heat exchanger. The size of the ports 4 may be optimised to provide the required flow rates of fluid through the heat exchanger 50. An embodiment of the heat exchanger may, for example, be used to cool the thrust nozzle of a rocket engine by passing fuel through the heat exchanger which provides the added benefit of pre-heating the fuel prior to combustion. The heat exchanger may be formed as pipework or a self-supporting structure of the nozzle wall.

Figure 6 shows a portion of a reactor 60 comprising the arrangement of interconnected hollow spheres 40 shown in figure 4. The interior surface of the hollow spheres is coated with a catalyst. The reactor 60 has a fluid inlet and a fluid outlet, a reactive fluid 61 is passed through the interconnected hollow spheres via their respective ports 4 between the inlet and the outlet. The reactive fluid 61 passed through the interconnected hollow spheres and over the catalyst is chemically reacted. The arrangement of interconnected hollow spheres 40 has a large surface area to volume ratio making the structure particularly well suited to use as a reactor.

In an alternative arrangement the catalyst may be coated on the exterior surface of the hollow spheres and a reactive fluid may be passed over the exterior surface of the hollow spheres. Yet further alternatively two catalytic coatings (which may be the same or different) may be provided on the interior and exterior surfaces respectively of the hollow spheres for reacting two separate reactive fluids, one passed through the interconnected hollow spheres and the other passed over the exterior surface of the hollow spheres. I highly compact reactor may thereby be provided. The temperature of the reaction inside the pressure vessel may be controlled with a fluid outside the pressure vessel.

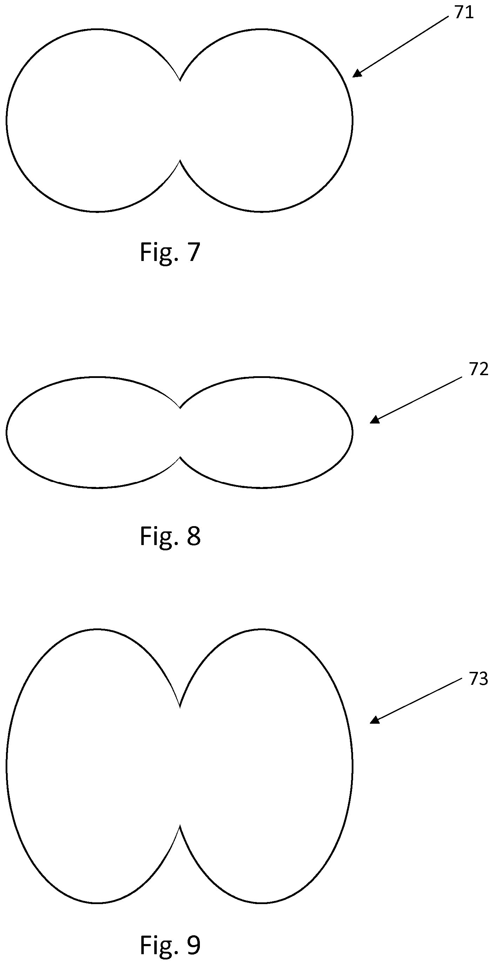

In the above described embodiments the truncated hollow spheroids are perfect or approximate spherical bodies 71 that are truncated to form the interconnection, as shown in Figure 7. In alternative arrangements that may readily be combined with the embodiments described above the interconnected spheroids are substantially oblate spheroids 72, as shown in Figure 8, or are substantially prolate spheroids 73, as shown in Figure 9.

In the design of pressure vessels according to the invention the sphere size may be selected so as to provide a minimum wall thickness for a given maximum pressure, so as to optimise the structure. In practice there are limits to the minimum wall thickness for manufacture, handling or corrosion. The wall thickness to sphere radius may be designed to obey hoop stress laws, or otherwise.

In the above described embodiments the hollow spheres may comprise one or more of metal, plastic, or fibre reinforced composite materials. In particular the heat exchanger may be constructed of metal or other material having a high thermal conductivity. Metal structures may also be fatigue hardened during manufacture, or during use if intended, to improve their structural performance. The hollow spheres may be overwrapped with carbon or other fibre windings. The fibre windings may pass through the "pillars" between the spheres.

Whilst the arrangement of interconnected hollow spheres may be formed by a variety of manufacturing techniques, such as casting for example, it is expected that additive manufacturing techniques may be most appropriate.

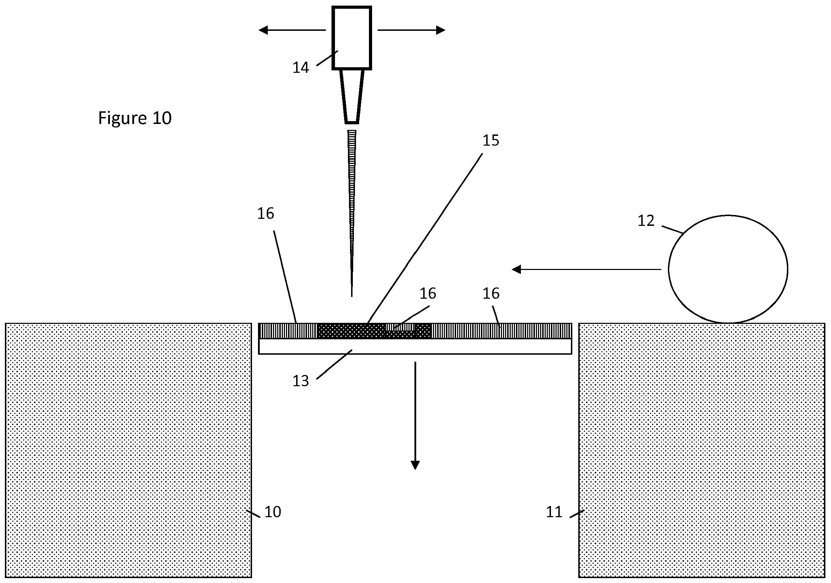

Figure 10 illustrates a powder bed processing additive layer manufacturing (ALM) system, as an example of one method for manufacturing the pressure vessels described above. The system comprises a pair of feed containers 10, 11 containing powdered metallic material such as powdered Titanium. A roller 12 picks up powder from one of the feed containers (in the example of Figure 10, the roller 12 is picking up powder from the right hand feed container) and rolls a continuous bed of powder over a substrate 13. A laser head 14 then scans over the powder bed, and a laser beam from the head is turned on and off to melt the powder in a desired pattern.

The substrate 13 then moves down by a small distance (typically of the order of 0.1 mm) to prepare for growth of the next layer. After a pause for the melted powder to solidify, the roller 12 proceeds to roll another layer of powder over substrate 13 in preparation for sintering. Thus as the process proceeds, a sintered part 15 is constructed, supported by unconsolidated powder parts 16. After the part has been completed, it is removed from substrate 13 and the unconsolidated powder 16 is recycled before being returned to the feed containers 10, 11.

Movement of the laser head 14 and modulation of the laser beam is determined by a Computer Aided Design (CAD) model of the desired profile and layout of the part.

Although the invention has been described above with reference to one or more preferred embodiments, it will be appreciated that various changes or modifications may be made without departing from the scope of the invention as defined in the appended claims.

## Claims

1. A pressure vessel comprising a plurality of interconnected hollow spheroids (2), each hollow spheroid is truncated to form at least two ports (4) which are fluidly connected to respective ports of adjacent hollow spheroids, and adjacent hollow spheroids have overlapping radii at the connected ports, **characterised in that** each hollow spheroid has an outer wall which is contiguous with the outer wall of an adjacent hollow spheroid at the connected ports, and the contiguous walls of at least three of the adjacent connected ports intersect to form a pillar (8) at the intersection.

2. A pressure vessel according to claim 1, wherein the outer wall has a thickness, and the wall thickness increases nearest the ports (4).

3. A pressure vessel according to claim 1 or claim 2, wherein the pillar (8) is solid, or is hollow.

4. A pressure vessel according to claim 3, wherein the hollow pillar (8) provides a fluid path, and a plurality of the hollow pillars fluidly connect to chambers around the interconnected hollow spheroids.

5. A pressure vessel according to any preceding claim, wherein the hollow spheroids (2) are each of the same size, or are of different sizes.

6. A pressure vessel according to any preceding claim, wherein the hollow spheroids (2) are arranged as a finite 2-dimensional or a finite 3-dimensional lattice.

7. A pressure vessel according to claim 6, wherein the lattice approximates to a Bravais lattice.

8. A pressure vessel according to any preceding claim, wherein the hollow spheroids (2) are one of: spheres, oblate spheres, prolate spheres or approximate spheres.

9. A pressure vessel according to any preceding claim, wherein outer walls of the hollow spheroids (2) comprise one of more of: metal, plastic, or fibre reinforced composite materials.

10. A fuel container (26) comprising the pressure vessel according to any preceding claim.

11. A heat exchanger (50) comprising the pressure vessel according to any of claims 1 to 9, wherein the pressure vessel has a fluid inlet and a fluid outlet, and a first fluid medium is arranged for passing through the interconnected hollow spheroids of the pressure vessel and a second fluid medium is arranged for passing around the interconnected hollow spheroids.

12. A reactor (60) comprising the pressure vessel according to any of claims 1 to 9, and further comprising a catalyst coated on an exterior surface and/or an interior surface of the hollow spheroids.

13. A method of manufacturing a pressure vessel according to any of claims 1 to 9, the method comprising building the pressure vessel by an additive manufacturing technique.

## Patentansprüche

1. Druckkessel, umfassend eine Vielzahl von miteinander verbundenen hohlen Sphäroiden (2), wobei jedes hohle Sphäroid angeschnitten ist, so dass sich wenigstens zwei Öffnungen (4) bilden, die mit entsprechenden Öffnungen von benachbarten hohlen Sphäroiden fließverbunden sind, und benachbarte hohle Sphäroide übereinanderliegende Radien an den verbundenen Öffnungen aufweisen, **dadurch gekennzeichnet, dass** jedes hohle Sphäroid eine Außenwand aufweist, die an den verbundenen Öffnungen an die Außenwand eines benachbarten hohlen Sphäroids stößt, und sich die aneinanderstoßenden Außenwände wenigstens dreier benachbarter verbundener Öffnungen derart schneiden, dass sie an der Schnittstelle eine Säule (8) bilden.

2. Druckkessel nach Anspruch 1, wobei die Außenwand eine Dicke aufweist und die Dicke nahe den Öffnungen (4) zunimmt.

3. Druckkessel nach Anspruch 1 oder Anspruch 2, wobei die Säule (8) massiv oder hohl ist.

4. Druckkessel nach Anspruch 3, wobei die hohle Säule (8) einen Strömungspfad bereitstellt und eine Vielzahl der hohlen Säulen mit Kammern um die miteinander verbundenen hohlen Sphäroide fließverbunden sind.

5. Druckkessel nach einem der vorherigen Ansprüche, wobei die hohlen Sphäroide (2) jeweils von gleicher Größe sind oder von unterschiedlicher Größe sind.

6. Druckkessel nach einem der vorherigen Ansprüche, wobei hohlen Sphäroide (2) in einem endlichen 2-dimensionalen oder einem endlichen 3-dimensionalen Gitter angeordnet sind.

7. Druckkessel nach Anspruch 6, wobei das Gitter einem Bravais-Gitter nahekommt.

8. Druckkessel nach einem der vorherigen Ansprüche, wobei die hohlen Sphäroide (2) eines sind von: Kugeln, abgeplattete Kugeln, gestreckte Kugeln oder annähernd Kugeln.

9. Druckkessel nach einem der vorherigen Ansprüche, wobei die Außenwände der hohlen Sphäroide (2) eines oder mehreres umfassen von: Metall, Kunststoff oder faserverstärktes Verbundmaterial.

10. Kraftstoffbehälter (26), umfassend den Druckkessel nach einem der vorherigen Ansprüche.

11. Wärmetauscher (50), umfassend den Druckkessel nach einem der Ansprüche 1 bis 9, wobei der Druckkessel einen Fluideinlass und einen Fluidauslass aufweist und ein erstes Fluidmedium bereitgestellt ist, das durch die miteinander verbundenen hohlen Sphäroide des Druckbehälters läuft, und ein zweites Fluidmedium bereitgestellt ist, das um die miteinander verbundenen hohlen Sphäroide läuft.

12. Reaktor (60), umfassend den Druckkessel nach einem der Ansprüche 1 bis 9 und ferner umfassend einen Katalysator, der auf einer äußeren Oberfläche und/oder einer inneren Oberfläche der hohlen Sphäroide aufgetragen ist.

13. Verfahren zum Herstellen eines Druckkessels nach einem der Ansprüche 1 bis 9, das Verfahren umfassend das Bilden des Druckbehälters durch eine additive Fertigungstechnik.

## Revendications

1. Réservoir sous pression comprenant une pluralité de sphéroïdes creuses reliées entre elles (2), chaque sphéroïde creuse est tronquée pour former au moins deux orifices (4) qui sont reliés par fluide à des orifices respectifs de sphéroïdes creuses adjacentes, et des sphéroïdes creuses ont des rayons qui se chevauchent aux orifices reliés, **caractérisé en ce que** chaque sphéroïde creuse présente une paroi externe qui est contiguë à la paroi externe d'une sphéroïde creuse adjacente au niveau des orifices reliés, et les parois contiguës d'au moins trois parmi des orifices adjacents reliés se croisent pour former une colonne (8) au niveau de l'intersection.

2. Réservoir sous pression suivant la revendication 1, dans lequel la paroi externe présente une épaisseur, et l'épaisseur de la paroi augmente à proximité des orifices (4).

3. Réservoir sous pression suivant la revendication 1 ou 2, dans lequel la colonne (8) est pleine ou creuse.

4. Réservoir sous pression suivant la revendication 3, dans lequel la colonne creuse (8) fournit une trajectoire de fluide, et une pluralité de colonnes creuses sont reliées par fluide à des chambres autour des sphéroïdes creuses reliées entre elles.

5. Réservoir sous pression suivant une des revendications précédentes, dans lequel les sphéroïdes creuses (2) sont de taille identique ou de taille différente.

6. Réservoir sous pression suivant une des revendications précédentes, dans lequel les sphéroïdes creuses (2) sont disposées à la manière d'un réseau bidimensionnel fini ou d'un réseau tridimensionnel fini.

7. Réservoir sous pression suivant la revendication 6, dans lequel le treillis correspond approximativement à un réseau de Bravais.

8. Réservoir sous pression suivant une des revendications précédentes, dans lequel les sphéroïdes creuses (2) sont soit des sphères, soit des sphères oblates, soit des sphères prolates soit des sphères approximatives.

9. Réservoir sous pression suivant une des revendications précédentes, dans lequel des parois externes des sphéroïdes creuses (2) comprennent soit un métal, soit un plastique, soit un matériau composite renforcé de fibres, soit plusieurs de ceux-ci.

10. Réservoir de carburant (26) comprenant le réservoir sous pression suivant une des revendications précédentes.

11. Echangeur de chaleur (50) comprenant le réservoir sous pression suivant une des revendications 1 à 9, dans lequel le réservoir sous pression présente une entrée de fluide et une sortie de fluide, et un premier milieu fluide est prévu pour passer à travers les sphéroïdes creuses reliées entre elles du réservoir de pression et un second milieu fluide est prévu pour passer autour des sphéroïdes creuses reliées entre elles.

12. Réacteur (60) comprenant le réservoir de pression suivant une des revendications 1 à 9, et comprenant en plus un catalyseur appliqué sur une surface extérieure et/ou une surface intérieure des sphéroïdes creuses.

13. Procédé de fabrication d'un réservoir de pression suivant une des revendications 1 à 9, le procédé comprenant la construction du réservoir sous pression par une technique de fabrication additive.
